# EUROPÄISCHE PATENTSCHRIFT

(11) **EP 3 023 699 B1**
(45) Veröffentlichungstag und Bekanntmachung des Hinweises auf die Patenterteilung: **30.01.2019**
(21) Anmeldenummer: 15191424.9
(22) Anmeldetag: 26.10.2015
(51) Int. Cl.: F24C 3/00

(54) **GASKOCHSTELLE**
GAS COOKING HOB
PLAQUE DE CUISSON AU GAZ

(30) Priorität: 20.11.2014 ES 201431712
(43) Veröffentlichungstag der Anmeldung: 25.05.2016
(73) Patentinhaber: BSH Hausgeräte GmbH, 81739 München (DE)
(72) Erfinder: Palacios Valdueza, Luis Antonio, 39610 Astillero (ES); Placer Maruri, Emilio, 39120 Liencres (ES); Saiz Gonzalez, Roberto, 39539 Santander (ES)

(56) Entgegenhaltungen:
- EP-A2- 2 527 665
- WO-A2-2009/146730
- FR-A1- 2 177 598
- GB-A- 2 312 262
- US-A- 1 802 086
- US-A- 1 925 810
- US-A- 2 554 626
- US-A- 6 096 987
- US-A1- 2008 184 983
- US-B1- 6 237 638

## Beschreibung

Die vorliegende Erfindung betrifft eine Gaskochstelle.

Eine Gaskochstelle kann eine Kochmuldenwanne, eine in der Kochmuldenwanne angeordnete Hauptgasleitung und mehrere an der Hauptgasleitung befestigte Gasventile aufweisen, die dazu eingerichtet sind, einen Brenngasstrom von der Hauptgasleitung zu einem jeweiligen Gasbrenner zu regeln oder zu unterbrechen. Beim Montieren einer Gasanschlussleitung an der Hauptgasleitung kann diese, um ein Verdrehen derselben zu verhindern, während der Montage mit einem Werkzeug wie beispielsweise einer Zange fixiert werden.

Die US 6,096,987 A beschreibt eine Gaskochstelle mit einer Hauptgasleitung, die eine Biegung aufweist. An der Hauptgasleitung sind Gasventile vorgesehen. Zwischen der Biegung und den Gasventilen ist eine Befestigungseinrichtung zum Befestigen der Hauptgasleitung an einer Kochmuldenwanne angeordnet.

Die EP 2 527 665 A2 beschreibt eine Gaskochstelle mit einer Einstelleinrichtung, mit deren Hilfe eine Position einer Hauptgasleitung einstellbar ist.

Die GB 2 312 262 A beschreibt eine Befestigungsschelle zum Befestigen eines Gasventils an einer Hauptgasleitung.

Die US 2,554,626 A beschreibt eine Gaskochstelle mit mehreren Gasbrennern, wobei jedem Gasbrenner ein Gasventil zugeordnet ist.

Die US 6,237,638 B1 beschreibt eine Gaskochstelle mit einer Hauptgasleitung, die eine Biegung aufweist und an der Gasventile befestigt sind. Die Gaskochstelle umfasst eine Befestigungseinrichtung zum Befestigen der Hauptgasleitung an einer Kochmuldenwanne, wobei die Befestigungseinrichtung dazu eingerichtet ist, die Hauptgasleitung zu umgreifen.

Vor diesem Hintergrund besteht eine Aufgabe der vorliegenden Erfindung darin, eine verbesserte Gaskochstelle zur Verfügung zu stellen.

Demgemäß wird eine Gaskochstelle mit einer Kochmuldenwanne, zumindest einem Gasventil, einer Hauptgasleitung zum Zuführen von Brenngas zu dem zumindest einen Gasventil und einer Befestigungseinrichtung zum Befestigen der Hauptgasleitung an der Kochmuldenwanne vorgeschlagen. Dabei weist die Hauptgasleitung innerhalb der Kochmuldenwanne eine Biegung auf, wobei die Befestigungseinrichtung zwischen der Biegung und dem zumindest einen Gasventil angeordnet ist, wobei die Gaskochstelle einen Hauptschalter aufweist, der dazu eingerichtet ist, das zumindest eine Gasventil zu schließen, und wobei die Befestigungseinrichtung materialeinstückig mit einem Gehäuse des Hauptschalters ausgebildet ist.

Dadurch, dass die Befestigungseinrichtung zwischen der Biegung und dem zumindest einen Gasventil angeordnet ist, kann ein auf die Hauptgasleitung aufgebrachtes Drehmoment von der Befestigungseinrichtung aufgenommen werden. Eine Relativbewegung zwischen der Hauptgasleitung und dem zumindest einen Gasventil wird hierdurch unterbunden. Hierdurch können Leckagen an dem zumindest einen Gasventil verhindert werden. Weiterhin ist mit Hilfe der Befestigungseinrichtung eine vereinfachte Positionierung der Hauptgasleitung in der Kochmuldenwanne möglich. Auch kann auf ein Festhalten der Hauptgasleitung während der Montage einer Gasanschlussleitung an die Hauptgasleitung verzichtet werden. Hierdurch vereinfacht sich die Montage der Gasanschlussleitung. Die Biegung kann auch als Umbiegung, Verbiegung, Richtungsänderung oder Knick bezeichnet werden. Die Gaskochstelle kann Teil eines Haushaltsgeräts sein.

Gemäß einer Ausführungsform weist die Biegung einen Winkel von 90° auf.

Die Hauptgasleitung weist insbesondere einen ersten Abschnitt und einen zweiten Abschnitt auf. Zwischen den Abschnitten ist die Biegung angeordnet. Die Abschnitte sind in einem Winkel von 90° zueinander orientiert. Unter einem Winkel von 90° ist vorliegend ein Winkel von bevorzugt 90° ± 10°, weiter bevorzugt von 90° ± 5°, weiter bevorzugt von 90° ± 3°, weiter bevorzugt von 90° ± 1°, weiter bevorzugt von genau 90° zu verstehen.

Gemäß einer weiteren Ausführungsform verläuft die Hauptgasleitung bis zu der Biegung entlang einer Seitenwand der Kochmuldenwanne und ab der Biegung entlang einer Vorderwand der Kochmuldenwanne.

Die Kochmuldenwanne weist einen Boden, zwei einander gegenüberliegend angeordnete Seitenwände, eine Rückwand und eine Vorderwand auf. Das zumindest eine Gasventil ist benachbart zu der Vorderwand angeordnet. Vorzugsweise sind mehrere Gasventile vorgesehen. Die Hauptgasleitung wird insbesondere durch eine in der Rückwand vorgesehene Öffnung oder einen Durchbruch in die Kochmuldenwanne hineingeführt.

Gemäß einer weiteren Ausführungsform ist die Befestigungseinrichtung mit der Kochmuldenwanne verschnappt.

Hierdurch kann eine schnelle und einfache Montage der Befestigungseinrichtung an der Kochmuldenwanne gewährleistet werden.

Gemäß einer weiteren Ausführungsform weist die Befestigungseinrichtung zumindest einen Eingriffsabschnitt auf, der dazu eingerichtet ist, formschlüssig in einen korrespondierenden Durchbruch der Kochmuldenwanne einzugreifen.

Beispielsweise kann die Befestigungseinrichtung drei Eingriffsabschnitte aufweisen, die dazu eingerichtet sind, formschlüssig in drei korrespondierende Durchbrüche der Kochmuldenwanne einzugreifen. Insbesondere sind die Eingriffsabschnitte in die Durchbrüche einschnappbar.

Gemäß einer weiteren Ausführungsform weist die Befestigungseinrichtung einen Greifabschnitt auf, der dazu eingerichtet ist, die Hauptgasleitung zumindest teilweise zu umgreifen.

Der Greifabschnitt ist zumindest abschnittsweise zylinder- oder rohrförmig. Der Greifabschnitt hat vorzugsweise eine Innenfläche, die flächig auf der Hauptgasleitung aufliegt. Der Greifabschnitt kann schellenförmig ausgebildet sein.

Gemäß einer weiteren Ausführungsform weist die Befestigungseinrichtung einen Basisabschnitt auf, der an der Kochmuldenwanne befestigbar ist, wobei der Basisabschnitt materialeinstückig mit dem Greifabschnitt ausgebildet ist.

Der Basisabschnitt kann an seiner Unterseite eine Vielzahl Rippen aufweisen. Hierdurch kann Material eingespart werden. Weiterhin kann zwischen dem Basisabschnitt und dem Greifabschnitt eine Stützrippe vorgesehen sein. Hierdurch wird die Befestigungseinrichtung versteift.

Gemäß einer weiteren Ausführungsform ist die Befestigungseinrichtung ein Kunststoffspritzgussbauteil.

Hierdurch kann die Befestigungseinrichtung kostengünstig in hohen Stückzahlen hergestellt werden. Insbesondere ist die Befestigungseinrichtung materialeinstückig ausgebildet.

Die Gaskochstelle weist einen Hauptschalter auf, der dazu eingerichtet ist, das zumindest eine Gasventil zu schließen.

Der Hauptschalter ist insbesondere dazu eingerichtet, eine elektrische Verbindung zwischen einem einem Gasbrenner zugeordneten Thermoelement und einem dem Gasbrenner zugeordneten Gasventil zu unterbrechen, um das Gasventil zu schließen. Hierdurch kann der Hauptschalter als Notausschalter verwendet werden.

Die Befestigungseinrichtung ist materialeinstückig mit einem Gehäuse des Hauptschalters ausgebildet.

Das Gehäuse des Hauptschalters ist vorzugsweise aus einem Kunststoffmaterial gefertigt. Insbesondere ist das Gehäuse des Hauptschalters ein Kunststoffspritzgussbauteil. Weitere mögliche Implementierungen der Gaskochstelle umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Gaskochstelle hinzufügen.

Weitere vorteilhafte Ausgestaltungen und Aspekte der Gaskochstelle sind Gegenstand der Unteransprüche sowie der im Folgenden beschriebenen Ausführungsbeispiele der Gaskochstelle. Im Weiteren wird die Gaskochstelle unter Bezugnahme auf die beigelegten Figuren näher erläutert.
Fig. 1 zeigt eine schematische Aufsicht einer Ausführungsform einer Gaskochstelle;
Fig. 2 zeigt eine schematische perspektivische Teilansicht der Gaskochstelle gemäß der Fig. 1;
Fig. 3 zeigt eine schematische perspektivische Ansicht eines nicht beanspruchten Beispiel einer Befestigungseinrichtung für die Gaskochstelle gemäß der Fig. 1;
Fig. 4 zeigt eine weitere schematische perspektivische Ansicht der Befestigungseinrichtung gemäß der Fig. 3;
Fig. 5 zeigt eine schematische perspektivische Unteransicht einer Ausführungsform einer Kochmuldenwanne für die Gaskochstelle gemäß der Fig. 1; und
Fig. 6 zeigt eine schematische perspektivische Ansicht eines erfindungsgemäßen

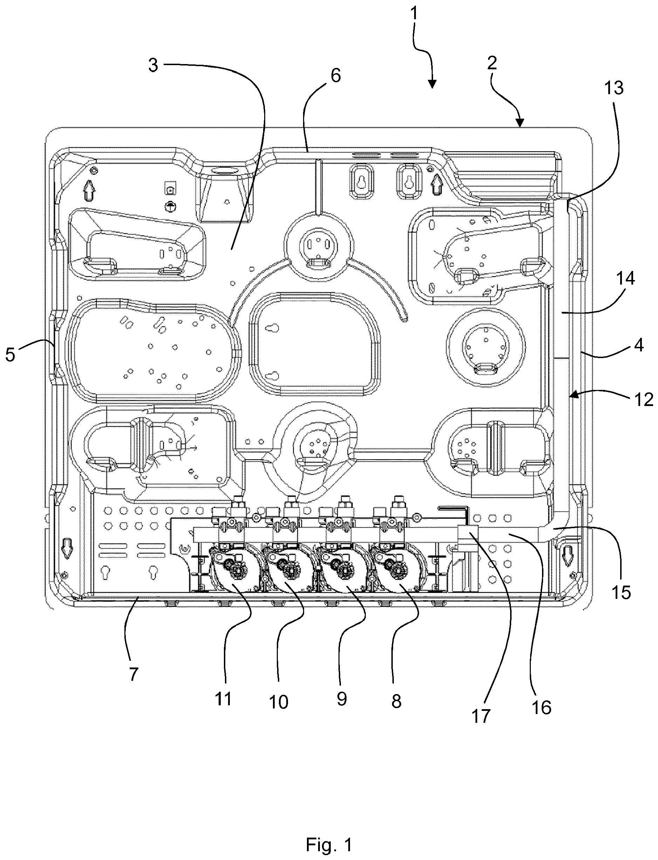

Hauptschalters für die Gaskochstelle gemäß der Fig. 1.

In den Figuren sind gleiche oder funktionsgleiche Elemente mit denselben Bezugszeichen versehen worden, sofern nichts anderes angegeben ist.

Die Fig. 1 zeigt eine schematische Aufsicht einer Ausführungsform einer Gaskochstelle 1. Die Gaskochstelle 1 kann mehrere in der Fig. 1 nicht gezeigte Gasbrenner aufweisen. Die Gaskochstelle 1 umfasst ferner eine Kochmuldenwanne 2, welche vorzugsweise aus einem Metallblech gefertigt ist. Die Kochmuldenwanne 2 weist einen Boden 3, zwei einander gegenüberliegend angeordnete Seitenwände 4, 5, eine Rückwand 6 und eine Vorderwand 7 auf. Die Gasbrenner können in der Kochmuldenwanne 2 angeordnet sein und über eine in der Fig. 1 nicht gezeigte Deckplatte oder ein sogenanntes Top Sheet herausragen.

Die Gaskochstelle 1 weist weiterhin zumindest ein Gasventil 8 bis 11 auf. Die Anzahl der Gasventile 8 bis 11 ist beliebig. Jedem Gasbrenner ist ein Gasventil 8 bis 11 zugeordnet. Die Gasventile 8 bis 11 sind benachbart zu der Vorderwand 7 angeordnet. Die Gasventile 8 bis 11 sind dazu eingerichtet, einen Brenngasstrom von einer Hauptgasleitung 12 der Gaskochstelle 1 zu einem dem jeweiligen Gasventil 8 bis 11 zugeordneten Gasbrenner zu regeln oder abzusperren. Die Gasventile 8 bis 11 können als stufenlose Gasventile oder als gestufte Gasventile, als sogenannte Step Valves, ausgebildet sein. Die Gasventile 8 bis 11 sind vorzugsweise an die Hauptgasleitung 12 angeklemmt.

Die Hauptgasleitung 12 wird von außerhalb der Kochmuldenwanne 2 durch einen Durchbruch 13 in das Innere der Kochmuldenwanne 2 geführt. Die Hauptgasleitung 12 verläuft in einem ersten Abschnitt 14 zunächst entlang der Seitenwand 4 der Kochmuldenwanne 2. An den Abschnitt 14 schließt sich eine Biegung 15 an. Die Biegung 15 kann auch als Verbiegung, Umbiegung, Umlenkung, Richtungsänderung oder Knick bezeichnet werden. Ab der Biegung 15 verläuft die Hauptgasleitung 12 und insbesondere ein zweiter Abschnitt 16 der Hauptgasleitung 12 entlang der Vorderwand 7 der Kochmuldenwanne 2. Die Biegung 15 weist einen Winkel von 90° auf. Das heißt der erste Abschnitt 14 und der zweite Abschnitt 16 der Hauptgasleitung 12 sind in einem Winkel von 90° zueinander orientiert.

Die Gaskochstelle 1 weist weiterhin eine Befestigungseinrichtung 17 auf. Die Befestigungseinrichtung 17 ist zwischen der Biegung 15 der Hauptgasleitung 12 und dem zumindest einen Gasventil 8 bis 11 angeordnet. Hierdurch kann ein beim Montieren einer Gasanschlussleitung an die Hauptgasleitung 12 auf diese aufgebrachtes Drehmoment von der Befestigungseinrichtung 17 aufgenommen werden. Dadurch, dass die Befestigungseinrichtung 17 zwischen der Biegung 15 und dem zumindest einen Gasventil 8 bis 11 angeordnet ist, wird eine Relativbewegung der Hauptgasleitung 12 gegenüber dem zumindest einen Gasventil 8 bis 11 verhindert, wodurch unerwünschte Undichtigkeiten zwischen dem zumindest einen Gasventil 8 bis 11 und der Hauptgasleitung 12 zuverlässig verhindert werden.

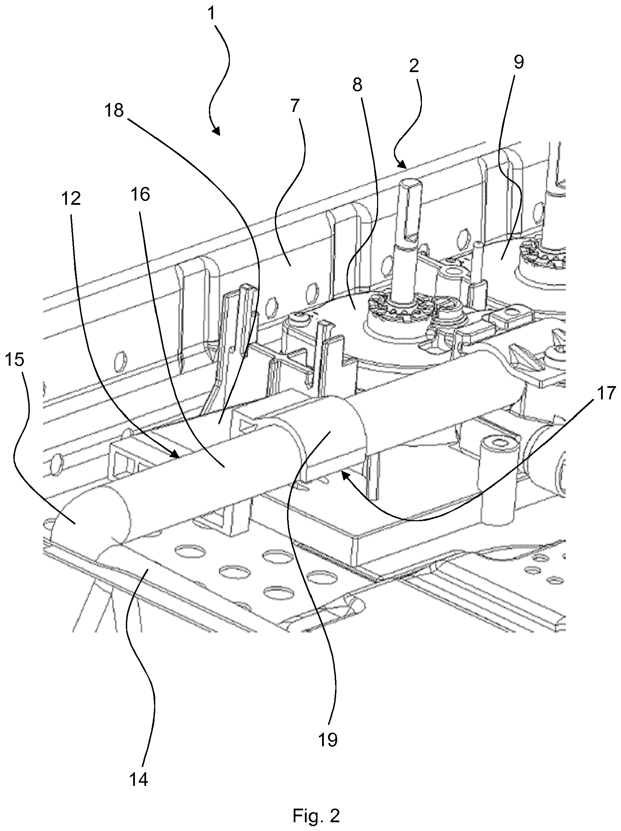

Die Fig. 2 zeigt eine vergrößerte schematische perspektivische Ansicht der Gaskochstelle 1 mit der Befestigungseinrichtung 17. Die Befestigungseinrichtung 17 weist einen plattenförmigen Basisabschnitt 18 auf, der an der Kochmuldenwanne 2 befestigbar ist. Weiterhin weist die Befestigungseinrichtung 17 einen Greifabschnitt 19 auf, der dazu eingerichtet ist, die Hauptgasleitung 12 zumindest teilweise zu umgreifen. Der Greifabschnitt 19 ist vorzugsweise schellenförmig ausgebildet. Der Basisabschnitt 18 ist vorzugsweise materialeinstückig mit dem Greifabschnitt 19 ausgebildet. Die Befestigungseinrichtung 17 ist mit der Kochmuldenwanne 2 vorzugsweise verschnappt.

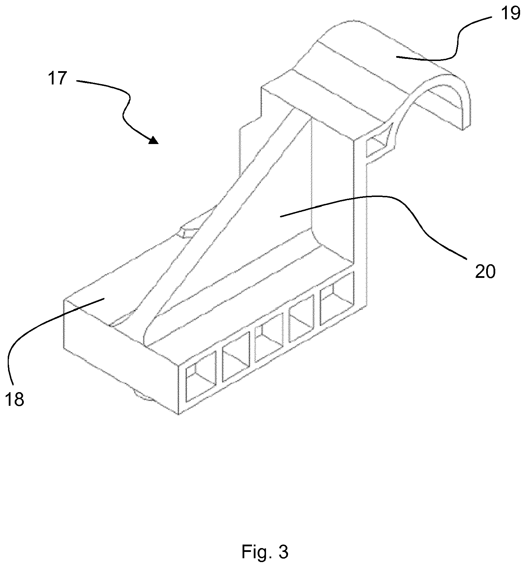

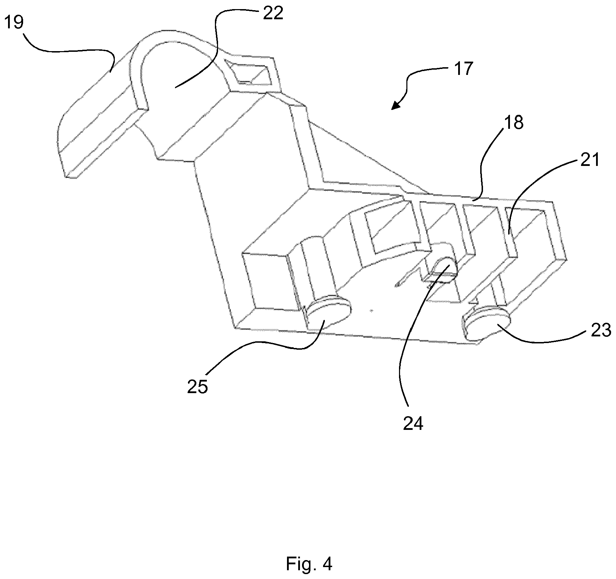

Die Fig. 3 und 4 zeigen jeweils eine schematische perspektivische Ansicht einer Ausführungsform der Befestigungseinrichtung 17. Der Greifabschnitt 19 weist vorzugsweise eine halbzylindrische Geometrie auf. Der Basisabschnitt 18 ist über eine Rippe 20 mit dem Greifabschnitt 19 verbunden. Die Rippe 20 dient der Versteifung der Befestigungseinrichtung 17. Unterseitig ist der Basisabschnitt 18 mit weiteren Rippen 21 versehen. Hierdurch kann eine Materialersparnis beim Herstellen der Befestigungseinrichtung 17 erreicht werden. Die Befestigungseinrichtung 17 ist vorzugsweise materialeinstückig ausgebildet. Insbesondere ist die Befestigungseinrichtung 17 ein Kunststoffspritzgussbauteil.

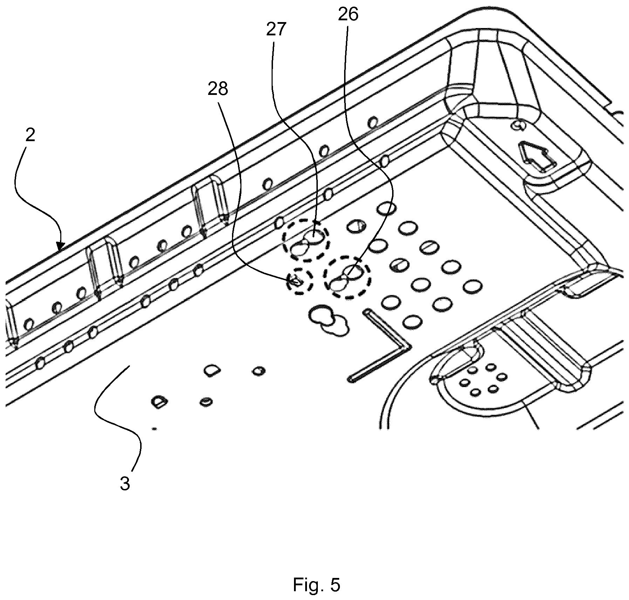

Der Greifabschnitt 19 liegt mit einer Innenfläche 22 flächig auf der Hauptgasleitung 12 auf. Wie die Fig. 4 zeigt, weist die Befestigungseinrichtung 17 zumindest einen Eingriffsabschnitt 23 bis 25 auf. Die Befestigungseinrichtung 17 kann drei Eingriffsabschnitte 23 bis 25 aufweisen. Die Eingriffsabschnitte 23 bis 25 sind dazu eingerichtet, jeweils formschlüssig in einen korrespondierenden Durchbruch 26 bis 28 (Fig. 5) der Kochmuldenwanne 2 einzugreifen. Insbesondere sind die Eingriffsabschnitte 23 bis 25 in die Durchbrüche 26 bis 28 einschnappbar. Hierdurch kann eine einfache und schnelle Montage der Befestigungseinrichtung 17 an der Kochmuldenwanne 2 erreicht werden.

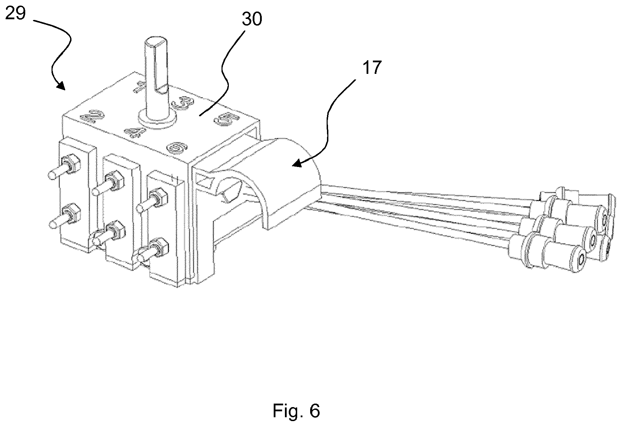

Erfindungsgemäß weist die Gaskochstelle 1 weiterhin einen in der Fig. 6 gezeigten Hauptschalter 29 auf, der dazu eingerichtet ist, das zumindest eine Gasventil 8 bis 11 zu schließen. Der Hauptschalter 29 ist vorzugsweise ein elektromechanischer Schalter und ist dazu eingerichtet, eine elektrische Verbindung zwischen einem Thermoelement eines jeweiligen Gasbrenners und einem dem Gasbrenner zugeordneten Gasventil 8 bis 11 zu unterbrechen. Der Hauptschalter 29 kann somit als Notausschalter genutzt werden.

Der Hauptschalter 29 weist ein Gehäuse 30 auf. Die Befestigungseinrichtung 17 ist materialeinstückig mit dem Gehäuse 30 ausgebildet. Der Hauptschalter 29 wird benachbart zu dem zumindest einen Gasventil 8 bis 11 angeordnet. Der Hauptschalter 29 ist zwischen der Biegung 15 der Hauptgasleitung 12 und dem zumindest einen Gasventil 8 bis 11 angeordnet. Der Hauptschalter 29 weist somit eine Doppelfunktion auf. Zum einen kann er als Notausschalter genutzt werden, zum anderen kann mit der Befestigungseinrichtung 17, die einstückig mit dem Gehäuse 30 ausgebildet ist, die Hauptgasleitung 12 fixiert werden.

### Verwendete Bezugszeichen:

- 1: Gaskochstelle
- 2: Kochmuldenwanne
- 3: Boden
- 4: Seitenwand
- 5: Seitenwand
- 6: Rückwand
- 7: Vorderwand
- 8: Gasventil
- 9: Gasventil
- 10: Gasventil
- 11: Gasventil
- 12: Hauptgasleitung
- 13: Durchbruch
- 14: Abschnitt
- 15: Biegung
- 16: Abschnitt
- 17: Befestigungseinrichtung
- 18: Basisabschnitt
- 19: Greifabschnitt
- 20: Rippe
- 21: Rippe
- 22: Innenfläche
- 23: Eingriffsabschnitt
- 24: Eingriffsabschnitt
- 25: Eingriffsabschnitt
- 26: Durchbruch
- 27: Durchbruch
- 28: Durchbruch
- 29: Hauptschalter
- 30: Gehäuse

## Patentansprüche

1. Gaskochstelle (1) mit einer Kochmuldenwanne (2), zumindest einem Gasventil (8 - 11), einer Hauptgasleitung (12) zum Zuführen von Brenngas zu dem zumindest einen Gasventil (8 - 11) und einer Befestigungseinrichtung (17) zum Befestigen der Hauptgasleitung (12) an der Kochmuldenwanne (2), wobei die Hauptgasleitung (12) innerhalb der Kochmuldenwanne (2) eine Biegung (15) aufweist und wobei die Befestigungseinrichtung (17) zwischen der Biegung (15) und dem zumindest einen Gasventil (8 - 11) angeordnet ist, **dadurch gekennzeichnet, dass** die Gaskochstelle (1) einen Hauptschalter (29) aufweist, der dazu eingerichtet ist, das zumindest eine Gasventil (8 - 11) zu schließen, und wobei die Befestigungseinrichtung (17) materialeinstückig mit einem Gehäuse (30) des Hauptschalters (29) ausgebildet ist.

2. Gaskochstelle nach Anspruch 1, **dadurch gekennzeichnet, dass** die Biegung (15) einen Winkel von 90° aufweist.

3. Gaskochstelle nach Anspruch 1 oder 2, **dadurch gekennzeichnet, dass** die Hauptgasleitung (12) bis zu der Biegung (15) entlang einer Seitenwand (4) der Kochmuldenwanne (2) und ab der Biegung (15) entlang einer Vorderwand (7) der Kochmuldenwanne (2) verläuft.

4. Gaskochstelle nach einem der Ansprüche 1 - 3, **dadurch gekennzeichnet, dass** die Befestigungseinrichtung (17) mit der Kochmuldenwanne (2) verschnappt ist.

5. Gaskochstelle nach einem der Ansprüche 1 - 4, **dadurch gekennzeichnet, dass** die Befestigungseinrichtung (17) zumindest einen Eingriffsabschnitt (23 - 25) aufweist, der dazu eingerichtet ist, formschlüssig in einen korrespondierenden Durchbruch (26 - 28) der Kochmuldenwanne (2) einzugreifen.

6. Gaskochstelle nach einem der Ansprüche 1 - 5, **dadurch gekennzeichnet, dass** die Befestigungseinrichtung (17) einen Greifabschnitt (19) aufweist, der dazu eingerichtet ist, die Hauptgasleitung (12) zumindest teilweise zu umgreifen.

7. Gaskochstelle nach Anspruch 6, **dadurch gekennzeichnet, dass** die Befestigungseinrichtung (17) einen Basisabschnitt (18) aufweist, der an der Kochmuldenwanne (2) befestigbar ist, und dass der Basisabschnitt (18) materialeinstückig mit dem Greifabschnitt (19) ausgebildet ist.

8. Gaskochstelle nach einem der Ansprüche 1 - 7, **dadurch gekennzeichnet, dass** die Befestigungseinrichtung (17) ein Kunststoffspritzgussbauteil ist.

## Claims

1. Gas cooking hob (1) with a hob baseplate (2), at least one gas valve (8 - 11), a main gas line (12) for supplying combustion gas to the at least one gas valve (8 - 11) and a fastening facility (17) for fastening the main gas line (12) to the hob baseplate (2), wherein the main gas line (12) has a bend (15) within the hob baseplate (2) and wherein the fastening facility (17) is arranged between the bend (15) and the at least one gas valve (8 - 11), **characterised in that** the gas cooking hob (1) has a main switch (29), which is configured to close the at least one gas valve (8 - 11), and wherein the fastening facility (17) is embodied as made of the same material as a housing (30) of the main switch (29).

2. Gas cooking hob according to claim 1, **characterised in that** the bend (15) has an angle of 90°.

3. Gas cooking hob according to claim 1 or 2, **characterised in that** the main gas line (12) runs up to the bend (15) along a side wall (4) of the hob baseplate (2) and from the bend (15) runs along a front wall (7) of the hob baseplate (2).

4. Gas cooking hob according to one of claims 1 - 3, **characterised in that** the fastening facility (17) is snap-fitted with the hob baseplate (2).

5. Gas cooking hob according to one of claims 1 - 4, **characterised in that** the fastening facility (17) has at least one engagement section (23- 25), which is configured to engage into a corresponding cut-out (26-28) of the hob baseplate (2) in a form-fit manner.

6. Gas cooking hob according to one of claims 1 - 5, **characterised in that** the fastening facility (17) has a gripping section (19), which is configured to encompass the main gas line (12) at least partially.

7. Gas cooking hob according to claim 6, **characterised in that** the fastening facility (17) has a base section (18) which can be fastened to the hob baseplate (2), and that the base section (18) is embodied as made of the same material as the gripping section (19).

8. Gas cooking hob according to one of claims 1 - 7, **characterised in that** the fastening facility (17) is a plastic injection-moulded component.

## Revendications

1. Fourneau à gaz (1) avec un plateau de cuisson (2), au moins une vanne à gaz (8-11), un tuyau de gaz principal (12) pour l'acheminement de gaz combustible à au moins une vanne de gaz (8-11) et un dispositif de fixation (17) pour la fixation du tuyau de gaz principal (12) sur le plateau de cuisson (2), le tuyau de gaz principal (12) présentant, dans le plateau de cuisson (2), un coude (15) et le dispositif de fixation (17) étant disposé entre ce coude (15) et la au moins une vanne de gaz (8-11), **caractérisé en ce que**
le fourneau à gaz (1) présente un commutateur principal (29) prévu pour fermer la au moins une vanne de gaz (8-11) et le dispositif de fixation (17) étant réalisé d'un seul matériau avec le boîtier (30) du commutateur principal (29).

2. Fourneau à gaz selon la revendication 1, **caractérisé en ce que** le coude (15) a un angle de 90°.

3. Fourneau à gaz selon la revendication 1 ou 2, **caractérisé en ce que** le tuyau de gaz principal (12) va jusqu'au coude (15) le long d'une paroi latérale (4) du plateau de cuisson (2) et à partir du coude (15) le long d'une paroi avant (7) du plateau de cuisson (2).

4. Fourneau à gaz selon l'une des revendications 1-3, **caractérisé en ce que** le dispositif de fixation (17) se clipse au plateau de cuisson (2).

5. Fourneau à gaz selon l'une des revendications 1-4, **caractérisé en ce que** le dispositif de fixation (17) présente au moins une partie de prise (23 - 25) prévue pour se mettre en prise par emboîtement dans une fente correspondante (26 - 28) du plateau de cuisson (2).

6. Fourneau à gaz selon l'une des revendications 1-5, **caractérisé en ce que** le dispositif de fixation (17) présente une partie de prise (19) prévue pour envelopper au moins partiellement le tuyau principal de gaz (12).

7. Fourneau à gaz selon la revendication 6, **caractérisé en ce que** le dispositif de fixation (17) présente une partie de base (18) qu'on peut fixer au plateau de cuisson (2) et **en ce que** cette partie de base (18) est réalisée en une seule matière avec la partie de prise (19).

8. Fourneau à gaz selon l'une des revendications 1-7, **caractérisé en ce que** le dispositif de fixation (17) est un composant moulé par injection en matière synthétique.
